# EUROPÄISCHE PATENTSCHRIFT

(11) **EP 0 713 281 B1**
(45) Veröffentlichungstag und Bekanntmachung des Hinweises auf die Patenterteilung: **06.10.1999**
(21) Anmeldenummer: 95810672.6
(22) Anmeldetag: 30.10.1995
(51) Int. Cl.: H02K 3/38

(54) **Lötösenisolierung**
Soldering eye isolation
Isolation de cosse à souder

(30) Priorität: 17.11.1994 DE 4440950
(43) Veröffentlichungstag der Anmeldung: 22.05.1996
(73) Patentinhaber: ASEA BROWN BOVERI AG, 5400 Baden (CH)
(72) Erfinder: Gasparini, Rico, CH-5415 Rieden (CH); Herzog, Kurt, CH-8102 Oberengstringen (CH); Schuler, Roland, CH-5430 Wettingen (CH)

(56) Entgegenhaltungen:
- DE-A- 4 237 079
- GB-A- 2 126 804
- US-A- 4 160 926
- PATENT ABSTRACTS OF JAPAN Bd. 006, Nr. 234 (E-143) 20 November 1982 & JP 57 134 913 A (TOKYO SHIBAURA DENKI KK) 20 August 1982

## Beschreibung

### Technisches Gebiet

Die Erfindung bezieht sich auf eine elektrische Maschine gemäss dem Oberbegriff des Anspruchs 1.

### Technologischer Hintergrund und Stand der Technik

Eine elektrische Maschine mit einer Statorwicklung, deren Stabenden im Wickelkopf Lötösen aufweisen, die voneinander und gegenüber geerdeten Gehäuseteilen isoliert ist beispielsweise im Buch SEQUENZ "Herstellung der Wicklungen elektrischer Maschinen" Springer-Verlag Wien, New York, 1973, Seite 162, Abb. 100b, beschrieben und dargestellt.
Die Isolierung der Stabenden (Lötösen) der Statorwicklung elektrischer Maschinen erfolgt normalerweise mittels einer Kappe aus Isoliermaterial, wie sie bespielsweise in der JP 57 134913 offenbart wird. Diese Kappe muss möglichst genau der Geometrie der Lötöse angepasst sein. Bedingt durch die Art und Weise der Herstellung der Lötösen sind diese nicht alle unter sich gleich. Die Anpassung an die jeweilige Form ist zeitaufwendig. Das Dokument DE-A-42 37 079 beschriebt einen Isolierstrumpf für Lötösen, der aus elastischem sog. 3-D-Material besteht.

Bei Statorwicklungen von Grossmaschinen werden diese Kappen mit einem härtenden Kunststoff ausgefüllt, z.B. ausgeschäumt oder ausgegossen. Bei Statorwicklungen in Ganztränktechnik (vgl. a.a.O. Seite 153, 154) erfolgt dieses Ausfüllen vor oder nach der Ganztränkung. In jedem Fall ist das Verfahren zeitaufwendig, weil zu diesem Zweck die ganze Statorwicklung jeweils in die richtige Stellung gebracht werden muss. Zudem ergeben sich relativ schlechte Wärmeübergänge wegen der örtlich entstehenden dicken Schichten an Ausfüllmasse mit niedriger Wärmeleitfähigkeit.

### Kurze Darstellung der Erfindung

Der Erfindung liegt die Aufgabe zugrunde, eine Lötösenisolierung anzugeben, die wirtschaftlich herzustellen ist, praktisch keinen Anpassungsaufwand erfordert und eine gute thermische Leitfhigkeit aufweist.

Diese Aufgabe wird erfindungsgemäss dadurch gelöst, dass die Lötöse allseits von einem verformbaren, für das Tränkharz durchlässigen Isoliermaterial umgeben ist, welches um die Lötöse gefaltet ist und diese an deren Breitseiten ohne Überlappung umschliesst.
Das Isoliermaterial wird von einem schrumpfbaren, ebenfalls für das Tränkharz durchlässigen Gewebe gehalten.

Vorteilhaft besteht das Isoliermaterial aus Matten, Vliesen, Geweben mit hoher Wärmeleitfähigkeit, z.B. Keramik, Glas. Das schrumpfbare Gewebe ist vorzugsweise ein Glas-/Polyester-Mischgewebe.

Der Vorteil der Erfindung ist insbesondere darin zu sehen, dass sich das veformbare Isoliermaterial sehr gut der Form der Lötöse durch Faltung anpasst und somit relativ schlechte Wärmeübergänge aufgrund von örtlich unterschiedlich dicken Schichten an Ausfüllmasse (Tränkharz) vermieden werden. Desweiteren werden durch Umschliessung der Lötöse ohne Überlappung des Isoliermaterials an den Breitseiten der Lötöse Stosstellen an spannungsmässig kritischen Stellen vermieden.

Weiterreichend wirkt sich vorteilhaft aus, dass das Isoliermaterial bereits beim Vortrocknungsprozess, der dem Ganztränkprozess vorangeht, oder beim Aushärten der getränkten Wicklung durch das schrumpfbare Gewebe gut an die Lötöse angepresst wird. Das schrumpfbare Gewebe ermöglicht auch eine Verschrumpfung schon beim Aufbringen z.B. mittels eines Heissluftgebläses. Beim späteren Ganztränken kann trotzdem eine ausreichende Menge an Tränkharz in die beiden Schichten bis zur Lötöse eindringen und damit die "Kappe" sicher an der Lötöse befestigen.

Die thermische Leitfähigkeit ist deutlich höher als bei konventionellen Lösungen mit Isolierkappe und Ausfüllmasse. Die Lötösenisolierung ist einfach und wirtschaftlich herstellbar. Sie kann für die unterschiedlichsten Oesenformen verwendet werden, weil sie quasi selbstanpassend ist. Der Werkzeugaufwand ist minim, da die Fixierung durch das Schrumpfgewebe erfolgt.

Ein Ausführungsbeispiel der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Längsschnitt durch das mit einer Lötöse versehene Stabende einer Statorwicklung einer elektrischen Maschine;
- Fig.2: einen Querschnitt durch das Stabende gemäss Fig.1 längs deren Linie AA;
- Fig.3: ein Draufsicht auf eine Matte aus Isoliermaterial im auseinandergefalteten Zustand.

### WEGE ZUR AUSFÜHRUHG DER ERFINDUNG

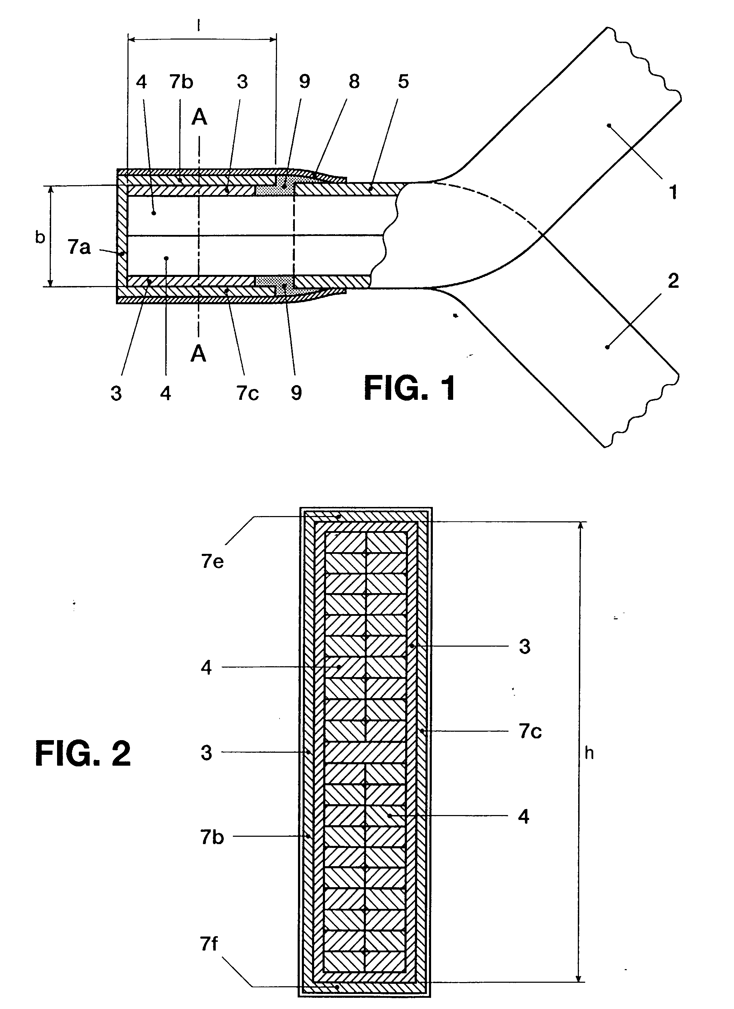

Gemäss Fig.1 sind zwei Statorwicklungsstäbe 1, 2, die aus unterschiedlichen Nuten eines (nicht eingezeichneten) Statorblechkörpers einer elektrischen Maschine austreten, mittels einer Lötöse 3 elektrisch und mechanisch miteinander verbunden. Wie Fig.2 zeigt bestehen die Stäbe 1, 2 aus einer Vielzahl voneinander isolierter Teilleiter 4, die von einer Stabisolierung 5 umgeben sind. Diese endet kurz vor der Lötöse 3 (Fig.1).

Die Lötöse 3 besteht aus einer Kupferlegierung und weist im Beispielsfall die Form eines Rohrstücks aus Vierkantrohr auf. Sie wird auf beide blanken Stabenden, die mittels eines Füllstücks 6 aus Kupfer distanziert sind, aufgeschoben und mit diesen durch Weich- oder Hartlötung in bekannter Weise verbunden.

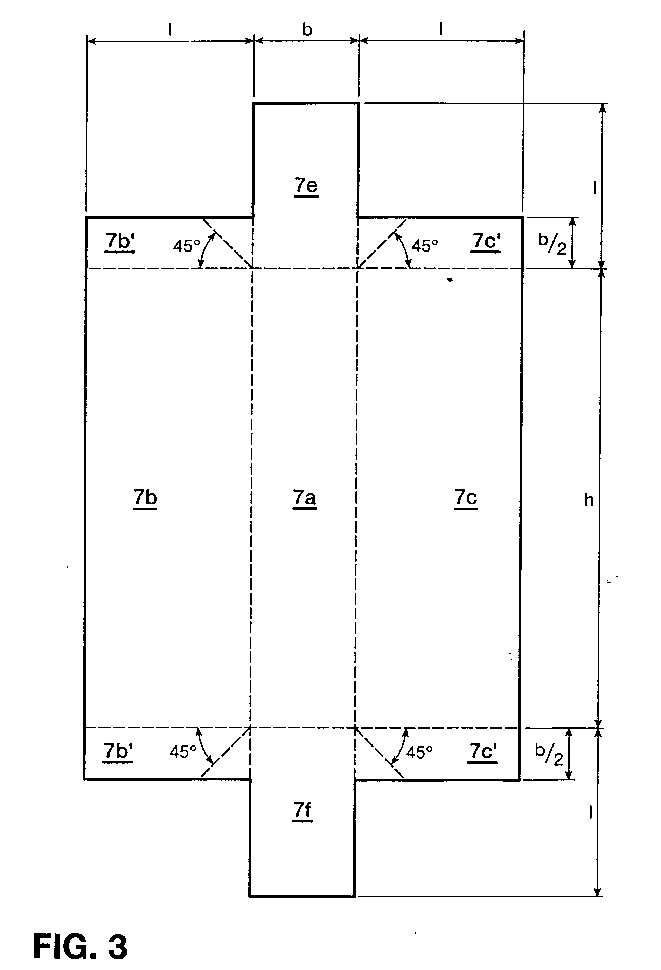

Um die Lötöse wird ein Vlies 7 aus thermisch gut leitendem, für das Tränkharz durchlässigem Isoliermaterial geschlagen, welche die in Fig.3 dargestellte Form aufweist. Geeignet hierfür sind z.B. Vliese oder Matten aus Keramik- oder Glasfasern. Es umfasst einen Stirnteil 7a, mit einer Länge h = radiale Höhe der Lötöse 3 und einer Breite b = Breite der Lötöse 3 in Umfangsrichtung, zwei breite Seitenteile 7b, 7c mit einer Breite 1 = Länge der Lötöse in Axialrichtung und einer Länge h+b, sowie zwei schmale Seitenteile 7e, 7f mit der Breite b und der Länge 1-b/2. Die Faltlinien sind in Fig.3 strichliert eingezeichnet. Im montierten Zustand weist dieses Gebilde in etwa die Gestalt einer Kappe auf, welche die Lötöse 3 allseits umfasst, wobei die Teile 7b' und 7c' auf den Schmalseiten der Lötöse zu liegen kommen, während der Mittelteil von 7b und 7c die Breitseiten der Lötöse 3 bedeckt. Durch diesen Zuschnitt und geeignete Lage der Falten - in Fig.3 sind die Abmessungen und Faltlinien massstäblich zu Fig.l und 2 eingezeichnet - wird eine gleichmässige Auftragsdicke vorzugsweise ohne Ueberlappungen auf den Breitseiten der Lötöse 3 erreicht. Gleichzeitig lassen sich auch Stossstellen der Isolierung an spannungsmässig kritischen Stellen (z.B. Kanten) vermeiden.

Diese Kappe wird von einem Stück Schrumpfgewebe 8 umfasst, z.B. einem Mischgewebe mit Kettfäden aus schrumpfbarem Polyester und Schussfäden aus Glas. Das Schrumpfgewebe 8 reicht am freien Lötösenende bis an den Stirnteil 7a heran und erstreckt sich nach innen bis über die Stabisolierung 5. Dieses Schrumpfgewebeteil kann z.B. durch mehrmaliges Umwickeln des Vlieses 7 mit Gewebe in Bandform gebildet sein, oder es besteht aus einem Schlauchabschnitt aus Schrumpfgewebe. In beiden Fällen sollen dabei die schrumpfbaren Fäden in Umfangsrichtung verlaufen. Die Schrumpfung in Umfangsrichtung soll dabei im Bereich von 5 bis 20 % liegen, liegt also im Bereich herkömmlicher Schrumpfbänder.

Mischgewebe dieser Art bestehen z.B. aus Kettfäden aus vorgerecktem Polyester und Schussfäden aus Glas. Erwärmt man ein derartiges Gewebe, so verkürzen sich die Kettfäden, während die Schussfäden im wesentlichen ihre Länge beibehalten. Dies bewirkt eine Verkürung in Bandlängsrichtung. Diese Eigenschaft mach sich die Erfindung zu nutze.

Nach dem Einbau der Stäbe und Anbringen der Lötösen 3 wird die Isolierung (Vlies 7) an den einzelnen Lötösen angebracht. Durch Verschrumpfung des Schrumpfgewebes 8, z.B. mit Hilfe eines Heissluftgebläses, schmiegt sich das Vlies 7 unter Einwirkung der Schrumpfkraft des Schrumpfgewebes 8 satt an die Lötöse 3 an. Bei späteren Ganztränkprozess, wo der gesamte Statorblechkörper samt Statorwicklung mit Tränkharz überflutet wird, dringt das Tränkharz in die Stabisolierung und in die Lötösenisolierung (Schichten 7 und 8) ein, füllt dabei alle Hohlräume im Gewebe, Vlies oder Matte und zwischen diesen und der Lötöse, und dringt auch in den verbleibenden Hohlraum 9 (Fig.l) zwischen Stabisolierung 5 und Lötöse 3 bzw. Vlies 7 ein. Beim abschliessenden Aushärteprozess erfolgt dann die endgültige Schrumpfung, Fixierung sowie Aushärtung der Isolierung.

### BEZEICHNUNGSLISTE

- 1,2: Statorwicklungsstäbe
- 3: Lötöse
- 4: Teilleiter
- 5: Stabisolierung
- 6: Füllstück
- 7: Kappe aus Vlies
- 7a,..: Teile von 7
- 8: Schrumpfgewebe-Schlauch
- 9: Hohlraum zwischen 5 und 3 bzw. 7
- b: Breite von 3 in Umfangsrichtung
- h: Höhe von 3 in radialer Richtung
- l: Länge der Lötöse

## Patentansprüche

1. Elektrische Maschine mit einer nach dem Ganztränkverfahren hergestellten Statorwicklung (1,2), deren Stabenden im Wickelkopf Lötösen (3) aufweisen, die voneinander und gegenüber geerdeten Gehäuseteilen isoliert sind, wobei die Lötösen (3) allseits von einem verformbaren, für das Tränkharz durchlässigen Isoliermaterial (7) umgeben sind, welches Isoliermaterial (7) mittels eines schrumpfbaren, ebenfalls für das Tränkharz durchlässigen Gewebes (8) gehalten ist, dadurch gekennzeichnet, dass das Isoliermaterial (7) um die Lötöse (3) gefaltet ist, wobei es die Lötöse (3) an deren Breitseiten ohne Überlappung umschliesst.

2. Elektrische Maschine nach Anspruch 1, dadurch gekennzeichnet, dass das Isoliermaterial (7) ein Vlies, eine Matte oder ein Gewebe ist.

3. Elektrische Maschine nach Anspruch 2, dadurch gekennzeichnet, dass das Isoliermaterial ein solches auf Keramik- oder Glasfaserbasis ist.

4. Elektrische Maschine nach Anspruch 1, dadurch gekennzeichnet, dass das schrumpfbare Gewebe (8) ein Mischgewebe aus schrumpfbaren Fäden, vorzugweise Polyester, und nicht schrumpfbaren Fäden, vorzugsweise Glas- oder Keramik, ist, wobei die schrumpfbaren Fäden in Umfangsrichtung um die Lötöse (3) verlaufen.

5. Elektrische Maschine nach Anspruch 4, dadurch gekennzeichnet, dass die Schrumpfung zwischen 5 und 20 % beträgt.

## Claims

1. Electric machine having a stator winding (1, 2) which is produced in accordance with the method of impregnation by total immersion and whose bar ends have soldering lugs (3) in the winding overhang which are insulated from one another and with respect to earthed housing parts, the soldering lugs (3) being surrounded on all sides by a deformable insulating material (7) which is pervious to the impregnating resin and is held by means of a shrinkable fabric (8) which is likewise pervious to the impregnating resin, characterized in that the insulating material (7) is folded around the soldering lug (3) and encloses the soldering lug (3) on the broad sides thereof without any overlap.

2. Electric machine according to Claim 1, characterized in that the insulating material (7) is a nonwoven, a matt or a fabric.

3. Electric machine according to Claim 2, characterized in that the insulating material is one based on ceramic or glass fibre.

4. Electric machine according to Claim 1, characterized in that the shrinkable fabric (8) is a mixed fabric made of shrinkable threads, preferably polyester, and non-shrinkable threads, preferably glass or ceramic, the shrinkable threads extending in the circumferential direction around the soldering lug (3).

5. Electric machine according to Claim 4, characterized in that the shrinkage is between 5 and 20%.

## Revendications

1. Machine électrique avec un enroulement statorique (1, 2) fabriqué selon le procédé d'imprégnation totale, dont les extrémités de barres dans la tête de bobine présentent des cosses à souder (3) qui sont isolées l'une par rapport à l'autre et par rapport à des parties du bâti mises à la terre, dans laquelle les cosses à souder (3) sont entourées de tous les côtés par une matière isolante (7) déformable et perméable à la résine d'imprégnation, matière isolante (7) qui est maintenue par un tissu (8) rétractable, également perméable à la résine d'imprégnation, caractérisée en ce que la matière isolante (7) est pliée autour de la cosse à souder (3), en entourant la cosse à souder (3) sur ses faces larges sans chevauchement.

2. Machine électrique suivant la revendication 1, caractérisée en ce que la matière isolante (7) est un feutre, une natte ou un tissu.

3. Machine électrique suivant la revendication 2, caractérisée en ce que la matière isolante est une matière à base de fibres de céramique ou de verre.

4. Machine électrique suivant la revendication 1, caractérisée en ce que le tissu rétractable (8) est un tissu mixte composé de fils rétractables, de préférence de polyester, et de fils non rétractables, de préférence de verre ou de céramique, dans lequel les fils rétractables sont orientés dans la direction périphérique autour de la cosse à souder (3).

5. Machine électrique suivant la revendication 4, caractérisée en ce que le retrait est compris entre 5 et 20 %.
